# EUROPÄISCHE PATENTSCHRIFT

(11) **EP 0 991 553 B1**
(45) Veröffentlichungstag und Bekanntmachung des Hinweises auf die Patenterteilung: **18.08.2004**
(21) Anmeldenummer: 99929023.2
(22) Anmeldetag: 24.04.1999
(51) Int. Cl.: B60S 1/04

(54) **ROHRPLATINE**
TUBE PLATE
PLATINE TUBULAIRE

(30) Priorität: 29.04.1998 DE 19819181; 06.08.1998 DE 19835552
(43) Veröffentlichungstag der Anmeldung: 12.04.2000
(73) Patentinhaber: ROBERT BOSCH GMBH, 70442 Stuttgart (DE); Sander Umformtechnik GmbH & Co. KG, 77871 Renchen-Ulm (DE)
(72) Erfinder: BRÜMMER, Dietmar, D-77830 Bühlertal (DE); MUEHLPFORTE, Kurt, D-77815 Bühl (DE); DIETRICH, Jan, D-77815 Bühl (DE); WIEGERT, Andreas, D-77876 Kappelrodeck (DE); ZEIBIG, Uwe, D-77855 Achern (DE)
(74) Vertreter: Kisselmann, Rudi
(86) Internationale Anmeldenummer: PCT/DE1999/001230
(87) Internationale Veröffentlichungsnummer: WO 1999/055562

(56) Entgegenhaltungen:
- EP-A- 0 484 175
- EP-A- 0 689 975
- EP-A- 0 979 188
- DE-A- 19 712 113
- US-A- 5 396 681

## Beschreibung

### Stand der Technik

Die Erfindung geht aus von einer Rohrplatine nach dem Oberbegriff des Anspruchs 1. Derartige Rohrplatinen werden insbesondere in Wischeranlagen für Kraftfahrzeuge eingesetzt.

Dort werden diese mit einem Wischerträger, der sogenannten Rohrplatine, an der Karosserie eines Kraftfahrzeugs befestigt. Die Platine umfaßt eine Motorplatine, die einen Wischerantrieb mit einem Wischermotor und einem daran angebauten Getriebe trägt. Eine Abtriebswelle des Getriebes ist in einem Getriebedom gelagert und treibt in der Regel über eine Kurbel und Gelenkstangen Kurbeln an, die mit einer Antriebswelle für jeden Scheibenwischer fest verbunden sind. Das Getriebegehäuse ist in der Regel mit drei Schrauben an der Motorplatine angeschraubt, die von einem Platinenrohr gehalten wird. Die Schrauben, die um den Getriebedom verteilt angeordnet und durch Schraubenlöcher der Motorplatine gesteckt sind, greifen in vorstehende Schraubenstutzen eines abtriebsseitigen Gehäusedeckels ein. Die Schraubenstutzen stützen das Getriebegehäuse an der Motorplatine ab.

Die Antriebswelle des Scheibenwischers ist in einem Wischerlager gelagert, dessen Lagergehäuse an den Enden der Platine befestigt oder angeformt ist. Diese ist unmittelbar über die Lagergehäuse oder über Befestigungsaugen, die am Lagergehäuse, an der Platine und/oder der Motorplatine angeformt sind, an einer Fahrzeugkarosserie befestigt.

Aus der DE-GM 74 34 119 ist eine Rohrplatine bekannt, die aus einem Vierkantrohr hergestellt ist, an das eine als Motorplatine dienende Platte angeschweißt ist. Derartige Rohrplatinen oder Rohrrahmenanlagen sind trotz einer leichten Bauweise sehr stabil. Aus Kostengründen wird ein gerades Trägerrohr angestrebt, da kein Vorbiegearbeitsgang erforderlich ist.

Es ist ferner aus der EP 04 09 944 B1 eine Rohrplatine bekannt, bei der eine Motorplatine rohrförmige Teile über formschlüssige Anschlüsse verbindet. Eine Variante zeigt, daß die Motorplatine mit einem Gehäusedeckel des Getriebegehäuses einstückig ausgebildet sein kann.

Die EP 0 781 691 A1 zeigt eine Rohrplatine mit einer Motorplatine und einem Platinenrohr. An der Seite, die dem Platinenrohr zugewandt ist, besitzt die Motorplatine eine Vertiefung, in der das Platinenrohr eingebettet und mittels einer Buckelschweißung übereinander liegend verbunden ist. Die Querschnittkontur der Vertiefung entspricht der Querschnittkontur des Platinenrohrs und umfaßt das Platinenrohr in einem Umfangsbereich von ca. 180°. Da die Motorplatine somit nur auf einer Seite des Platinenrohrs über wenige Punkte mit dem Platinenrohr verbunden ist, werden die im Wischbetrieb auftretenden Kräfte ungünstig auf die Verbindung der beiden Bauteile verteilt, so daß örtlich hohe Materialbeanspruchungen entstehen. Ferner treten aufgrund des Abstands zwischen dem Platinenrohr und der Abtriebswelle beträchtliche Biegemomente auf.

Es ist ferner aus der EP 0 689 975 A1 eine Rohrplatine mit einer Motorplatine bekannt. Diese besteht aus zwei spiegelbildlich gestalteten Teilen, die an der Seite zu einem Platinenrohr hin Vertiefungen aufweisen, in die das Platinenrohr eingebettet ist. Die Vertiefungen umgeben das Platinenrohr jeweils in einem Umfangsbereich von ca. 180°, so daß beide Vertiefungen zusammen das Platinenrohr auf dem gesamten Umfang umgeben. Bei der Montage werden beide Teile der Motorplatine um das Platinenrohr gelegt und miteinander verbunden, z.B. mechanisch oder durch Kleben oder durch eine thermische Verbindung. Dabei wird das Platinenrohr zur Motorplatine in Umfangsrichtung und in axialer Richtung formschlüssig und/oder durch Kleben stoffschlüssig fixiert. Die zwei Teile der Motorplatine können gemäß einer Ausgestaltung auch zu einem Stück vereinigt sein. Auch hierbei ist der Abstand zwischen der Abtriebswelle und dem Platinenrohr beachtlich.

Aus der nicht vorveröffentlichten EP-A-0 979 188 ist eine Rohrplatine bekannt, die eine Vertiefung besitzt, in der ein Platinenrohr eingebettet und gehalten ist. Der Rand der Motorplatine ist im Bereich der Vertiefung und quer zu dieser in Lappen unterteilt, die wechselweise das Platinenrohr von der einen und von der gegenüberliegenden Seite über einen Teilbereich des Umfangs umfassen.

### Vorteile der Erfindung

Die Rohrplatine mit den Merkmalen des Hauptanspruchs hat den Vorteil, daß das Platinenrohr beidseitig umfaßt ist, und die auftretenden Kräfte sowohl über die Vertiefung als auch über die Lasche auf die Fläche der Motorplatine verteilt werden. Dies ist deshalb möglich, weil die Vertiefung nicht am Rand der Motorplatine verläuft, sondern diese quert. Dadurch kann die Lasche innerhalb der Motorplatine ausgeklinkt sein und helfen, den Kraftfluß auf mehrere Seiten der Vertiefung zu verteilen.

Nach der Erfindung ist die Motorplatine ein Blechumformteil. Die Vertiefung verläuft bevorzugt zwischen mindestens einem Schraubenloch und der Öffnung für den Getriebedom. Dadurch liegt das Platinenrohr nahe an der Abtriebswelle des Getriebes, so daß nur geringe Biegemomente auftreten. Anschließend an die Öffnung für den Getriebedom und quer zur Vertiefung ist eine Lasche ausgeklinkt, die entgegengesetzt zur Vertiefung gewölbt ist und das Platinenrohr umfaßt. Dadurch wird das Platinenrohr annähernd an seinem gesamten Umfang gehalten. Die Kräfte, die im Wischbetrieb auftreten, werden somit im Bereich des Getriebedoms über einen großen Umfangsbereich des Platinenrohrs verteilt und reine Biegespannungen teilweise in Zug- und Druckspannungen umgewandelt. Trotz der günstigen Krafteinleitung hat die Motorplatine einen einfachen Aufbau und besteht aus einem Stück, das keine Hinterschneidungen oder doppelwandige Bereiche besitzt und als Biegeumformteil herstellbar ist.

Die Motorplatine und die Lasche umfassen wechselweise das Platinenrohr von gegenüberliegenden Seiten, wobei die einzelnen Bereiche im Vergleich zum gesamten Verbindungsbereich relativ schmal sind. Dadurch können sie einfach und kontrolliert durch Kleben oder Schweißen formschlüssig mit dem Platinenrohr verbunden werden, z.B. durch Buckelschweißen.

Um die Festigkeit zu erhöhen, ist es zweckmäßig, die Stoffschlußverbindung durch eine formschlüssige Verbindung zu unterstützen, indem z.B. das Platinenrohr und die entsprechende Vertiefung der Motorplatine und/oder die Lasche einen vom Kreisquerschnitt abweichenden Querschnitt erhalten. Zur Steigerung der Festigkeit sind ferner seitlich der Lasche Schlitze vorgesehen, deren Enden ausgerundet sind. Dadurch wird die Kerbspannung herabgesetzt und Spannungs- und Ermüdungsrisse werden in diesen Bereichen vermieden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Querschnitt durch eine an einem Platinenrohr befestigte Motorplatine entsprechend der Linie I-I in Fig. 2,
- Fig. 2: eine Draufsicht auf eine Motorplatine ohne Platinenrohr und
- Fig. 3: eine Variante zu Fig. 1 mit einem polygonen Querschnittprofil des Platinenrohrs.

### Beschreibung der Ausführungsbeispiele

Eine Rohrplatine 10 enthält ein Platinenrohr 12 und eine daran befestigte Motorplatine 14. Diese besitzt eine Öffnung 16, durch die ein Getriebedom 40 eines Getriebes 36 gesteckt wird. In dem Getriebedom 40 ist eine Abtriebswelle 42 gelagert. Die Kontur des Getriebes 36, das an einem nicht näher dargestellten Wischermotor angeflanscht ist, ist durch gestrichelte Linien angedeutet. Es wird durch Schrauben an der Motorplatine 14, 46 befestigt. Hierzu dienen Schraubenlöcher 18, die um die Öffnung 16 für den Getriebedom 40 verteilt angeordnet sind. Die Motorplatine 14, 46 ist ein Blechumformteil, dessen Rand 22 zu einer Versteifungsrippe hoch gebogen ist.

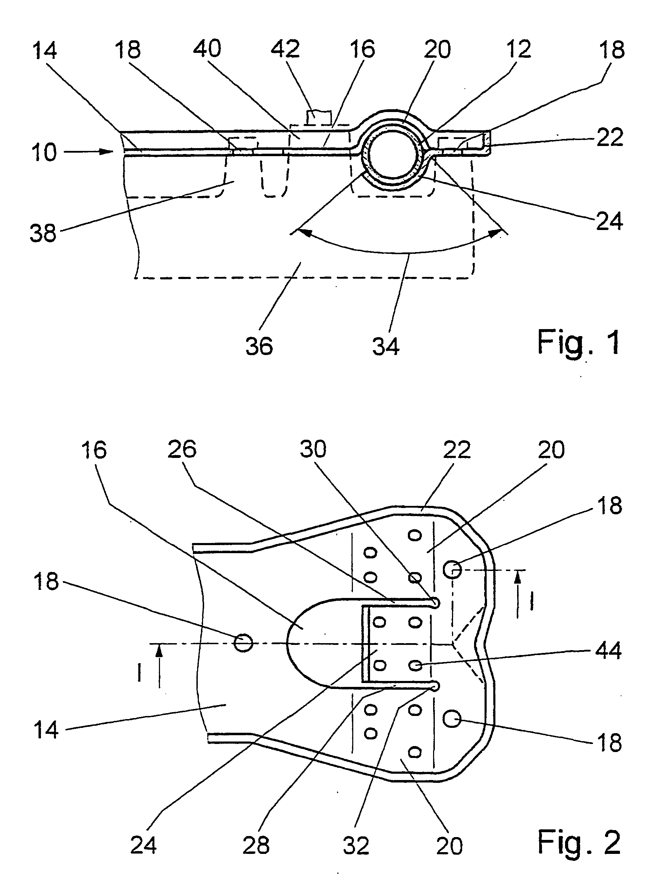

Zwischen der Öffnung 16 für den Getriebedom 40 und mindestens einem Schraubenloch 18 verläuft eine Vertiefung 20, 52, in der das Platinenrohr 12, 50 eingebettet ist. Quer zur Vertiefung 20, 52 ist anschließend an die Öffnung 16 eine Lasche 24, 48 ausgeklinkt. Sie ist entgegengesetzt zur Vertiefung 20, 52 gewölbt und umfaßt das Platinenrohr 12, 50 von der der Vertiefung 20, 52 gegenüberliegenden Seite.
Das Platinenrohr 12, 50 wird stoffschlüssig, z.B. durch Kleben oder Schweißen mit der Motorplatine 14, 46 verbunden. Für eine Buckelschweißung besitzt die dargestellte Ausführung nach Fig. 2 im Bereich der Vertiefung 20 und der Lasche 24 Schweißbuckel 44. Der Rand 22 liegt auf der der Lasche 24 gegenüberliegenden Seite der Motorplatine 14, 46 und überragt die geschlossene Seite der Vertiefung 20, 52.

Die Lasche 24 ist aus dem Blech der Motorplatine 14, 46 ausgeklinkt und umgeformt. Dabei wird zumindest ein Teil des Blechs aus dem Bereich der Öffnung 16 für den Getriebedom 40 verwendet. Seitlich der Lasche 24 sind Schlitze 26 und 28 vorgesehen, deren Enden 30 bzw. 32 ausgerundet sind, um die Gefahr von Spannungsrissen in diesen Bereichen zu vermeiden. Die Lasche 24 ist nur an einer Seite mit der Motorplatine 14, 46 verbunden und läßt sich elastisch federnd ein wenig aufbiegen, um das Platinenrohr 12, 50 zu montieren. Sie liegt danach kraftschlüssig am Platinenrohr 12, 50 an, wodurch ein anschließendes Schweißen begünstigt wird.

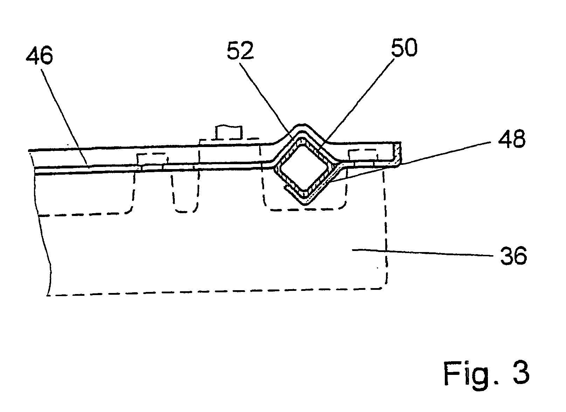

Die Motorplatine 46 nach Fig. 3 unterscheidet sich von der Motorplatine 14 nach Fig. 1 und 2 dadurch, daß die Vertiefung 52, die Lasche 48 und das Platinenrohr 50 eine polygone Querschnittkontur aufweisen. Dadurch wird die Motorplatine 46 formschlüssig mit dem Platinenrohr 50 verbunden. Diese Verbindung kann durch eine Stoffschlußverbindung unterstützt werden.

Eine weitere Verbesserung des Kraftflusses, insbesondere bei großen Motorplatinen, kann sich ergeben, wenn mehrere Laschen ausgeklinkt sind (nicht dargestellt). Diese können dann bevorzugt wechselseitig das Platinenrohr umfassen.

### Bezugszeichen

- 10: Rohrplatine
- 12: Platinenrohr
- 14: Motorplatine
- 16: Öffnung
- 18: Schraubenloch
- 20: Vertiefung
- 22: Rand
- 24: Lasche
- 26: Schlitz
- 28: Schlitz
- 30: Ende
- 32: Ende
- 34: Bereich
- 36: Getriebe
- 38: Schraubenstutzen
- 40: Getriebedom
- 42: Abtriebswelle
- 44: Schweißbuckel
- 46: Motorplatine
- 48: Lasche
- 50: Platinenrohr
- 52: Vertiefung

## Patentansprüche

1. Rohrplatine (10), insbesondere für Scheibenwischeranlagen, mit einer Motorplatine (14, 46) an der eine Motor-Getriebeeinheit (36) befestigbar ist und die eine Aufnahme in Form einer Vertiefung (20, 52) aufweist, in der ein Platinenrohr (12, 50) eingebettet und gehalten ist, **dadurch gekennzeichnet, daß** die Motorplatine (14, 46) ein Blechumformteil ist, daß die Vertiefung (20, 52) die Motorplatine (14, 46) quert und daß ferner eine Lasche (24, 48) quer zur Vertiefung (20, 52) ausgeklinkt ist, die entgegengesetzt zur Vertiefung (20, 52) gewölbt ist und das Platinenrohr (12, 50) umfaßt, und
daß die Motorplatine eine Öffnung (16) für einen Getriebedom (40) der Getriebeeinheit (36) und um diesen angeordnete Schraubenlöcher (18) zur Befestigung der Getriebeinheit (36) besitzt und daß die Vertiefung (20, 52) zwischen mindestens einem Schraubenloch (18) und der Öffnung (16) für den Getriebedom (40) verläuft, wobei anschließend an die Öffnung (16) die Lasche (24, 48) ausgeklinkt ist.

2. Rohrplatine (10) nach Anspruch 1, **dadurch gekennzeichnet, daß** die Lasche (24, 48) mit einem freien Ende zur Öffnung (16) weist.

3. Rohrplatine (10) nach einem der Ansprüche 1 bis 2, **dadurch gekennzeichnet, daß** das Platinenrohr (12) einen kreisförmigen Querschnitt hat und von der Lasche (24) in einem Umfangsbereich von mehr als 90° umfaßt ist.

4. Rohrplatine (10) nach einem der vorhergehenden Ansprüche, **dadurch gekennzeichnet, daß** die Motorplatine (14, 46) mit dem Platinenrohr (12, 50) stoffschlüssig verbunden ist.

5. Rohrplatine (10) nach einem der Ansprüche 1 oder 4, **dadurch gekennzeichnet, daß** das Platinenrohr (50) einen unrunden Querschnitt hat und mit der Motorplatine (46) formschlüssig verbunden ist.

6. Rohrplatine (10) nach einem der vorhergehenden Ansprüche, **dadurch gekennzeichnet, daß** sich seitlich der Lasche (24, 48) Schlitze (26, 28) befinden, deren Enden (30, 32) ausgerundet sind.

7. Rohrplatine (10) nach einem der vorhergehenden Ansprüche, **dadurch gekennzeichnet, daß** der Rand (22) der Motorplatine (14, 46) zur geschlossenen Seite der Vertiefung (20, 52) hoch gebogen ist.

8. Rohrplatine (10) nach einem der vorhergehenden Ansprüche, **dadurch gekennzeichnet, daß** die Lasche (24, 48) federnd ausgeführt ist.

## Claims

1. Tube mounting plate (10), in particular for window wiper systems, having a motor-mounting plate (14, 46) to which a motor/gear unit (36) can be fastened and which has a socket in the form of a depression (20, 52) in which a mounting-plate tube (12, 50) is embedded and held, **characterized in that** the motor-mounting plate (14, 46) is a sheet-metal formed part, **in that** the depression (20, 52) crosses the motor-mounting plate (14, 46), and **in that**, furthermore, a tab (24, 48) is released transversely to the depression (20, 52), the tab being curved in an opposed direction to the depression (20, 52) and surrounding the mounting-plate tube (12, 50), and **in that** the motor-mounting plate has an opening (16) for a gear dome (40) of the gear unit (36) and screw holes (18) which are arranged around the said gear dome and are intended for fastening the gear unit (36), and **in that** the depression (20, 52) runs between at least one screw hole (18) and the opening (16) for the gear dome (40), the tab (24, 48) being released following the opening (16).

2. Tube mounting plate (10) according to Claim 1, **characterized in that** one free end of the tab (24, 48) faces the opening (16).

3. Tube mounting plate (10) according to either of Claims 1 and 2, **characterized in that** the mounting-plate tube (12) has a circular cross section and is surrounded by the tab (24) by more than 90° in a circumferential region.

4. Tube mounting plate (10) according to one of the preceding claims, **characterized in that** the motor-mounting plate (14, 16) is connected to the mounting-plate tube (12, 50) with a cohesive material joint.

5. Tube mounting plate (10) according to either of Claims 1 and 4, **characterized in that** the mounting-plate tube (50) has a non-circular cross section and is connected to the motor-mounting plate (46) in a form-fitting manner.

6. Tube mounting plate (10) according to one of the preceding claims, **characterized in that** slots (26, 28), whose ends (30, 32) are rounded, are situated at the sides of the tab (24, 48).

7. Tube mounting plate (10) according to one of the preceding claims, **characterized in that** the edge (22) of the motor-mounting plate (14, 46) is bent up towards the closed side of the depression (20, 52).

8. Tube mounting plate (10) according to one of the preceding claims, **characterized in that** the tab (24, 48) is of resilient design.

## Revendications

1. Platine tubulaire (10), en particulier pour dispositifs d'essuie-glaces, comportant une platine moteur (14, 46) sur laquelle peut être fixée une unité de commande de moteur (36) et qui présente un logement sous forme de renfoncement (20, 52), dans lequel est inséré et maintenu un tube de platine (12, 50),
**caractérisée en ce que**
la platine moteur (14, 46) est une pièce moulée en tôle, le renfoncement (20, 52) traverse la platine moteur (14, 46) et en outre, une languette (24, 28) est découpée transversalement par rapport au renfoncement (20, 52), est courbée de façon opposée au renfoncement (20, 52) et comprend le tube de platine (12, 50), la platine moteur possède une ouverture (16) pour un dôme de commande (40) de l'unité de commande (36) ainsi que des orifices de vissage (18) disposés autour de celui-ci et permettant de fixer l'unité de commande (36), et le renfoncement (20, 52) s'étend entre au moins un trou de vis (18) et l'ouverture (16) pour le dôme de commande (40), la languette (24, 28) étant ensuite découpée au niveau de l'ouverture (16).

2. Platine tubulaire (10) selon la revendication 1,
**caractérisée en ce que**
la languette (24, 48) est tournée, avec une extrémité libre, en direction de l'ouverture (16).

3. Platine tubulaire (10) selon l'une des revendications 1 à 2,
**caractérisée en ce que**
le tube de platine (12) possède une section transversale circulaire et est entouré par la languette (24) dans une zone circonférentielle de plus de 90°.

4. Platine tubulaire (10) selon l'une des revendications précédentes,
**caractérisée en ce que**
la platine moteur (14, 46) est reliée par combinaison de matières avec le tube de platine (12, 50).

5. Platine tubulaire (10) selon l'une des revendications 1 ou 4,
**caractérisée en ce que**
le tube de platine (50) possède une section transversale non arrondie et est relié par complémentarité de forme avec la platine moteur (46).

6. Platine tubulaire (10) selon l'une des revendications précédentes,
**caractérisée en ce que**
des fentes (26, 28), dont les extrémités (30, 32) sont arrondies, se trouvent sur le côté de la languette (24, 28).

7. Platine tubulaire (10) selon l'une des revendications précédentes,
**caractérisée en ce que**
le bord (22) de la platine moteur (14, 46) est recourbé vers le haut au niveau du côté fermé du renfoncement (20, 52).

8. Platine tubulaire (10) selon l'une des revendications précédentes,
**caractérisée en ce que**
la languette (24, 48) est configurée de façon élastique.
